# EUROPÄISCHE PATENTSCHRIFT

(11) **EP 3 594 572 B1**
(45) Veröffentlichungstag und Bekanntmachung des Hinweises auf die Patenterteilung: **05.05.2021**
(21) Anmeldenummer: 19183788.9
(22) Anmeldetag: 02.07.2019
(51) Int. Cl.: F23K 5/14, F02M 37/00, F02M 37/08, F02M 37/14

(54) **FAHRZEUGHEIZGERÄT MIT KRAFTSTOFFANSCHLUSSEINHEIT**
VEHICLE HEATER WITH FUEL CONNECTION UNIT
DISPOSITIF DE CHAUFFAGE POUR VÉHICULE COMPRENANT UNE UNITÉ DE RACCORDEMENT DE CARBURANT

(30) Priorität: 09.07.2018 DE 102018116523
(43) Veröffentlichungstag der Anmeldung: 15.01.2020
(73) Patentinhaber: Eberspächer Climate Control Systems GmbH, 73730 Esslingen (DE)
(72) Erfinder: Haefner, Michael, 70469 Stuttgart (DE); Jensen, Hans, 73265 Dettingen unter Teck (DE)
(74) Vertreter: Ruttensperger Lachnit Trossin Gomoll

(56) Entgegenhaltungen:
- DE-A1- 3 136 839
- DE-A1-102005 015 117
- US-A1- 2017 260 944

## Beschreibung

Die vorliegende Erfindung betrifft ein brennstoffbetriebenes Fahrzeugheizgerät mit einer Kraftstoffanschlusseinheit, vermittels welcher das brennstoffbetriebene Fahrzeugheizgerät an ein Kraftstoffreservoir angeschlossen werden kann bzw. der von einem Kraftstoffreservoir heranströmende Kraftstoff in das Heizgerät eingeleitet werden kann.

Eine derartige Kraftstoffanschlusseinheit ist aus der nachveröffentlichten deutschen Patentanmeldung DE 10 2017 123 046 bekannt. Diese bekannte Kraftstoffanschlusseinheit umfasst einen scheibenartigen Anschlusseinheitkörper welcher in einer zugehörigen Öffnung eines Heizgerätegehäuses angeordnet ist bzw. werden kann. An einer dem Inneren des Heizgerätegehäuses zugewandten Seite führt von dem Anschlusseinheitkörper ein Kraftstoffabgabeleitungsanschlussbereich weg. An diesen kann eine im Inneren des Heizgerätes zu einem Brennerbereich führende Kraftstoffabgabeleitung angeschlossen werden, um Kraftstoff in Richtung zu einem in dem Brennerbereich vorgesehenen porösen Verdampfermedium zu leiten. An einer nach außen frei liegenden Seite des Anschlusseinheitkörpers erstreckt sich in einer der Erstreckung des Kraftstoffabgabeleitungsanschlussbereichs entgegengesetzten Richtung vom Anschlusseinheitkörper weg ein Kraftstoffzuführleitungsanschlussbereich. An diesen kann eine Kraftstoff von einem Reservoir heran leitende Kraftstoffzuführleitung angeschlossen werden.

Aus der DE 31 36 839 A1 ist ein brennstoffbetriebenes Fahrzeugheizgerät gemäß dem Oberbegriff des Anspruchs 1 bekannt. In eine langgestreckte Öffnung des Heizgerätegehäuses ist eine rohrartig ausgebildete Kraftstoffanschlusseinheit mit einem durch einen Rohrabschnitt desselben gebildeten Anschlusseinheitkörper eingesetzt. Ein den Anschlusseinheitkörper fortsetzender Rohrabschnitt steht über die Öffnung im Heizgerätegehäuse nach außen hervor und ist zum Anschluss einer Brennstoffleitung ausgebildet.

Die DE 10 2005 015 117 A1 offenbart eine langgestreckte Hubkolbenpumpe zum Fördern von Brennstoff zu einem Fahrzeugheizgerät. An einem den Hubkolben aufnehmenden Gehäuse sind Anschlussstutzen vorgesehen, an welche einerseits eine zu einem Brennstofftank führende Leitung und andererseits eine zu einem Heizgerät führende Leitung angeschlossen werden können.

Die US 2017/0260944 A1 offenbart eine in eine Leitung integrierbare Kraftstoffpumpe.

Es ist die Aufgabe der vorliegenden Erfindung, ein brennstoffbetriebenes Fahrzeugheizgerät vorzusehen, welches eine verbesserte Funktionalität bei kompakter Bauart aufweist.

Erfindungsgemäß wird diese Aufgabe gelöst durch ein brennstoffbetriebenes Fahrzeugheizgerät gemäß Anspruch 1. Dieses umfasst eine mittels eines Anschlusseinheitkörpers in ein Heizgerätegehäuse eingesetzte Kraftstoffanschlusseinheit. Die Kraftstoffanschlusseinheit umfasst den in eine Öffnung des Heizgerätegehäuses eingesetzten Anschlusseinheitkörper, einen von dem Anschlusseinheitkörper abstehenden Kraftstoffabgabeleitungsanschlussbereich zum Anschluss einer zu einer Brennkammer führenden Kraftstoffabgabeleitung und einen von dem Anschlusseinheitkörper abstehenden Kraftstoffzuführleitungsanschlussbereich zum Anschluss einer Kraftstoffzuführleitung, wobei in dem Anschlusseinheitkörper wenigstens eine Funktionseinheit zur Beeinflussung der Kraftstoffströmung in einem in dem Anschlusseinheitkörper ausgebildeten Kraftstoffströmungsvolumen vorgesehen ist.

Durch das Integrieren einer Funktionseinheit in die Kraftstoffanschlusseinheit wird es möglich, das Strömungsverhalten von Kraftstoff durch die Kraftstoffanschlusseinheit hindurch zu beeinflussen, ohne hierfür an anderer Stelle eine entsprechende Funktionseinheit vorsehen zu müssen. Dies führt einerseits zur Einsparung von Bauraum und ermöglicht es andererseits, die durch eine derartige Funktionseinheit bereitzustellende Funktion nahe am Fahrzeugheizgerät zu realisieren.

Dieser Effekt kann besonders dann in besonders vorteilhafter Art und Weise genutzt werden, wenn die wenigstens eine Funktionseinheit einen Pulsationsdämpfer umfasst. Es ist somit sichergestellt, dass ein derartiger Pulsationsdämpfer Schwankungen im Kraftstoffdruck sehr nahe an der Stelle glätten bzw. eliminieren kann, an welcher der Kraftstoff in einen Brennerbereich abgegeben wird.

Bei einer einfach zu realisierenden Ausgestaltung kann der Pulsationsdämpfer ein Druckausgleichsvolumen und ein das Druckausgleichsvolumen von dem Kraftstoffströmungsvolumen im Anschlusseinheitkörper trennendes, flexibles Trennorgan umfassen.

Für die Integration in die Kraftstoffanschlusseinheit kann vorgesehen sein, dass der Pulsationsdämpfer einen das Druckausgleichsvolumen bereitstellenden Pulsationsdämpferkörper umfasst, wobei das flexible Trennorgan an dem Pulsationsdämpferkörper das Druckausgleichsvolumen abschließend festgelegt ist, wobei weiter vorzugsweise in dem Anschlusseinheitkörper eine den Pulsationsdämpfer aufnehmende Dämpferaufnahmeaussparung ausgebildet sein kann.

Bei einer weiteren Ausgestaltungsart kann die wenigstens eine Funktionseinheit ein Kraftstoffventil umfassen. Es kann somit die Zufuhr bzw. Abgabe von Kraftstoff bzw. Kraftstoffdampf in unmittelbarer Nähe zum Brennerbereich eines derartigen Fahrzeugheizgeräts unterbrochen bzw. freigegeben werden.

Bei einer insbesondere zum Verhindern von Ausgasungen vorteilhaften Ausgestaltung wird vorgeschlagen, dass das Kraftstoffventil ein die Kraftstoffanschlusseinheit gegen Durchströmung in Richtung von dem Kraftstoffabgabeleitungsanschlussbereich zu dem Kraftstoffzuführleitungsanschlussbereich sperrendes Rückschlagventil umfasst.

Dabei kann für eine einfache Integration eines derartigen Rückschlagventils in den Anschlusseinheitkörper vorgesehen sein dass Rückschlagventil ein an einem ersten Anschlusseinheitkörperteil abgestütztes Vorspannorgan, vorzugsweise Vorspannfeder, und ein durch das Vorspannorgan gegen einen Ventilsitz an einem zweiten Anschlusseinheitkörperteil gepresstes Ventilorgan, vorzugsweise Ventilkugel, umfasst.

Weiter kann eine entsprechend dem geforderten Betrieb vorzunehmende Freigabe des Kraftstoffstroms dadurch ermöglicht werden, dass das Kraftstoffventil ein zum Freigeben und Sperren eines Strömungsweges von dem Kraftstoffzuführleitungsanschlussbereich zu dem Kraftstoffabgabeleitungsanschlussbereich ansteuerbares Schaltventil umfasst.

Bei einer weiteren Ausgestaltungsvariante kann die wenigstens eine Funktionseinheit eine Kraftstoffpumpe umfassen.

Die Kraftstoffpumpe umfasst beispielsweise eine an dem Anschlusseinheitkörper feststehend getragene Elektromagneteinheit und einen in einer Pumpenkammer linear hin und her bewegbaren Pumpenkolben und einen an dem Pumpenkolben vorgesehenen Anker zur magnetischen Wechselwirkung mit der Elektromagneteinheit, wobei der Pumpenkolben durch elektrische Erregung der Elektromagneteinheit in Richtung Ausstoßen von Kraftstoff aus der Pumpenkammer bewegbar ist und durch ein Vorspannorgan, vorzugsweise Vorspannfeder, in Richtung Aufnahme von Kraftstoff in der Pumpenkammer bewegbar ist. Eine derartige Kraftstoffpumpe ist als Dosierpumpe ausgebildet, bei welcher der als Pumporgan wirksame Pumpenkolben unter der Antriebswirkung des elektromagnetischen Antriebseinheit zum Fördern von Kraftstoff bewegt wird. Alternativ kann eine derartige Kraftstoffpumpe als Antriebseinheit ein Piezoelement umfassen, welches bei elektrischer Erregung seine Form ändert und dabei als Pumporgan wirksam ist oder ein Pumporgan zum Fördern von Kraftstoff bewegt.

Bei einer weiteren Ausgestaltungsvariante kann die wenigstens eine Funktionseinheit einen Kraftstofffilter umfassen.

Um den für das Fördern von Kraftstoff erforderlichen Hub für ein Pumporgan bzw. den dafür nötigen Bauraum bereitstellen zu können, wird vorgeschlagen, dass der Kraftstoffzuführleitungsanschlussbereich und der Kraftstoffabgabeleitungsanschlussbereich zueinander fluchtend angeordnet sind.

Bei einer besonders einfach zu realisierenden Ausgestaltung kann der Anschlusseinheitkörper mit dem Kraftstoffzuführleitungsanschlussbereich und dem Kraftstoffabgabeleitungsanschlussbereich integral, also als ein beispielsweise in einem Gussverfahren hergestellter Materialblock, ausgebildet sein.

Die vorliegende Erfindung wird nachfolgend mit Bezug auf die beiliegenden Figuren detailliert beschrieben. Es zeigt:
- Fig. 1: in Längsschnittansicht eine Kraftstoffanschlusseinheit für ein brennstoffbetriebenes Fahrzeugheizgerät;
- Fig. 2: eine teilweise prinzipartig dargestellte alternative Ausgestaltung einer Kraftstoffanschlusseinheit;
- Fig. 3: eine weitere teilweise prinzipartige Darstellung einer alternativen Ausgestaltung Kraftstoffanschlusseinheit;
- Fig. 4: eine Kraftstoffanschlusseinheit mit einem in einen Anschlusseinheitkörper integrierten Rückschlagventil;
- Fig. 5: Kraftstoffanschlusseinheit mit einer in einen Anschlusseinheitkörper integrierten Dosierpumpe.

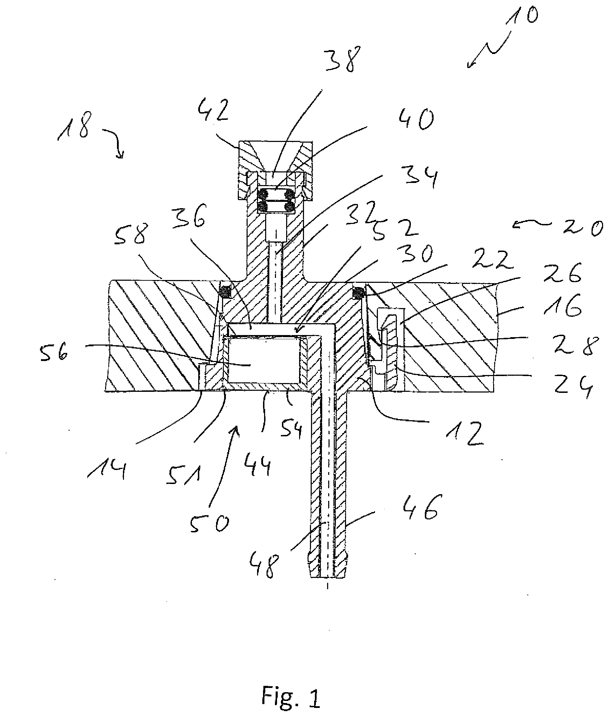

In Fig. 1 ist eine Kraftstoffanschlusseinheit für ein brennstoffbetriebenes Fahrzeugheizgerät allgemein mit 10 bezeichnet. Die Kraftstoffanschlusseinheit 10 umfasst einen scheibenartigen Anschlusseinheitkörper 12, der in eine diesem zugeordnete Öffnung 14 eines Heizgerätegehäuses 16 eines allgemein mit 18 bezeichneten Fahrzeugheizgeräts eingesetzt ist. Zur Herbeiführung eines dichten Abschlusses kann beispielsweise in seinem dem Inneren 20 des Heizgerätegehäuses 16 zugewandt liegenden Bereich der Anschlusseinheitkörper 12 von einem Dichtelement 22 umgeben sein, welches zwischen diesem und dem Heizgerätegehäuse 16 eingespannt werden kann. Für einen festen Zusammenhalt des Heizgerätegehäuses 16 mit der Kraftstoffanschlusseinheit 10 ist an dem Anschlusseinheitkörper 12 ein Rastelement 24 vorgesehen, das in eine Rastaussparung 26 des Heizgerätegehäuses 16 eingreifend einen Rastvorsprung 28 hintergreift und somit ein Herausziehen bzw. Herausfallen der Kraftstoffanschlusseinheit 10 aus der Öffnung 14 verhindert. Es können über den Umfang des in scheibenartiger Gestalt bereitgestellten Anschlusseinheitkörpers 12 mehrere derartige Rastelemente 24 vorgesehen sein.

An der dem Inneren 20 des Heizgerätegehäuses 16 zugewandt zu positionierenden Seite 30 des Anschlusseinheitkörpers 12 erstreckt sich von diesem ein Kraftstoffabgabeleitungsanschlussbereich 32. Dieser nach Art eines Rohrstutzens ausgebildete Kraftstoffabgabeanschlussleitungsbereich 32 weist in seinem Inneren einen Kraftstoffkanal 34 auf, der einerseits zu einem im Anschlusseinheitkörper 12 ausgebildeten Kraftstoffströmungsvolumen 36 offen ist und andererseits in einem erweiterten Endbereich 38 beispielsweise zwei Dichtelemente 40 aufnimmt. An dem Endbereich 38 ist ein die Dichtelemente 40 im Kraftstoffkanal 34 haltendes, trichterartig geformtes Halteelement 42 getragen, durch welches hindurch eine im Inneren 20 des Heizgerätegehäuses 16 sich erstreckende Kraftstoffabgabeleitung eingeführt werden kann. Nach dem Einführen ist auch durch die Klemmwirkung der Dichtelemente 40 die beispielsweise als starre Rohrleitung aus Metallmaterial aufgebaute Kraftstoffabgabeleitung gegen den Austritt von Kraftstoff gesichert mit dem Kraftstoffabgabeleitungsbereich 32 verbunden.

An der nach außen orientiert anzuordnenden Seite 44 erstreckt sich von dem Anschlusseinheitkörper 12 versetzt zu dem Kraftstoffabgabeanschlussleitungsbereich 32 ein Kraftstoffzuführleitungsanschlussbereich 46. Auch dieser ist nach Art eines Rohrstutzens ausgebildet und stellt in seinem Inneren einen zu dem Kraftstoffströmungsvolumen 36 im Anschlusseinheitkörper 12 offenen Kraftstoffkanal 48 bereit. Auf den Kraftstoffzuführleitungsanschlussbereich 46 kann eine beispielsweise als flexibler Schlauch ausgebildete Kraftstoffleitung aufgeschoben werden, um von einem Kraftstoffreservoir heranströmenden Kraftstoff in das Kraftstoffströmungsvolumen 36 und über dieses den Kraftstoffkanal 34 zu leiten.

Der Anschlusseinheitkörper 12 ist mit dem Kraftstoffabgabeleitungsanschlussbereich 32, dem Kraftstoffzuführleitungsanschlussbereich 46 und dem bzw. den Rastelementen 24 integral, also als ein Materialblock beispielsweise in einem Gussverfahren und beispielsweise aus Kunststoffmaterial hergestellt.

An dem Anschlusseinheitkörper 12 der Kraftstoffanschlusseinheit 10 ist eine allgemein mit 50 bezeichnete Funktionseinheit vorgesehen. Die Funktionseinheit 50 ist im dargestellten Ausgestaltungsbeispiel als Pulsationsdämpfer 52 ausgebildet und umfasst einen in einer Dämpferaufnahmeaussparung 51 aufgenommenen topfartigen Pulsationsdämpferkörper 54, in welchem ein beispielsweise mit Gas, wie z. B. Luft, gefülltes Druckausgleichsvolumen 56 bereitgestellt ist. Das Druckausgleichsvolumen 56 ist in Richtung zum Kraftstoffströmungsvolumen 36 hin durch ein am Pulsationsdämpferkörper 54 fest getragenes flexibles, beispielsweise membranartiges Trennorgan 58 abgeschlossen.

Aufgrund der Flexibilität des Trennorgans 58 und der Kompressibilität des im Druckausgleichsvolumen 56 vorhandenen Gases können Druckschwankungen in dem das Kraftstoffströmungsvolumen 36 durchströmenden Kraftstoff unter Verformung des Trennorgans 58 und Kompression des im Druckausgleichsvolumen 56 enthaltenen Gases geglättet und im Idealfalle eliminiert werden.

Für einen festen Zusammenhalt kann der Pulsationsdämpferkörper 54 in den Anschlusseinheitkörper 12 eingepresst sein oder/und kann daran bzw. darin durch Materialschluss, insbesondere Verklebung oder Verschweißung, festgelegt sein. Auch das Trennorgan 58 kann beispielsweise durch Verklebung oder Verschweißung mit dem Pulsationsdämpferkörper 54 fest verbunden sein.

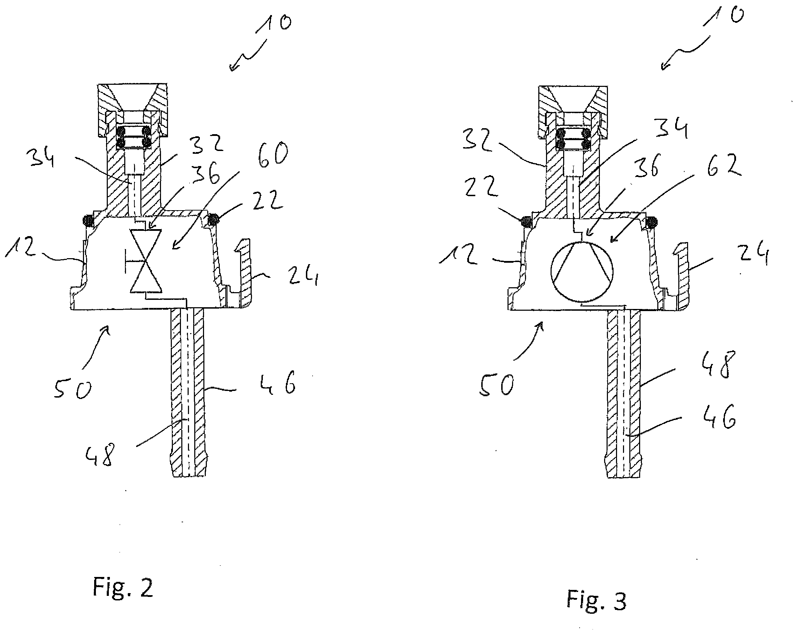

Nachfolgend noch detaillierter beschriebene Ausgestaltungsarten von Kraftstoffanschlusseinheiten sind in den Fig. 2 und 3 gezeigt. In der in Fig. 2 dargestellten Ausgestaltungsart ist im Anschlusseinheitkörper 12 als Funktionseinheit 50 ein allgemein mit 60 bezeichnetes Kraftstoffventil angeordnet. Dieses kann eine Strömungsverbindung zwischen den Kraftstoffkanälen 48, 34 herstellen bzw. sperren, um somit den Eintritt von Kraftstoff in das Fahrzeugheizgerät 18 zu verhindern bzw. das Ausgasen von Kraftstoffdampf aus dem Brennerbereich des Fahrzeugheizgeräts 18 zu verhindern.

Bei der in Fig. 3 dargestellten Ausgestaltungsart ist als Funktionseinheit 50 eine Kraftstoffpumpe 62 im Anschlusseinheitkörper 12 der Kraftstoffanschlusseinheit 10 angeordnet. Durch die Kraftstoffpumpe 62 kann aus einem Kraftstoffreservoir geförderter flüssiger Kraftstoff in Richtung zum Brennerbereich des Fahrzeugheizgeräts 18 gefördert werden.

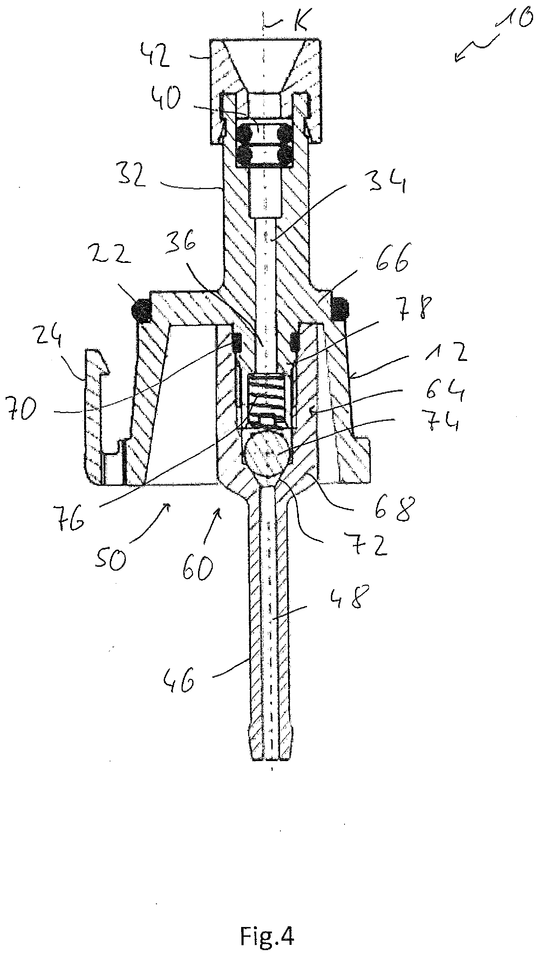

Die Fig. 4 zeigt eine Ausgestaltung einer Anschlusseinheit 10, bei welcher als Funktionseinheit 50 ein Kraftstoffventil 60, insbesondere ein Rückschlagventil 64 im Anschlusseinheitkörper 12 vorgesehen ist.

Der Anschlusseinheitkörper 12 ist bei dieser Ausgestaltungsform mit zwei Teilen ausgebildet. Ein erstes Anschlusskörperteil 66 weist den Kraftstoffabgabeleitungsanschlussbereich 32 mit dem darin gebildeten Kraftstoffkanal 34 auf, dessen inneres Ende auch das oder einen Teil des Kraftstoffströmungsvolumens 36 bildet. Das erste Teil 66 des Anschlusseinheitkörpers 12 ist in der vorangehend beschriebenen Art und Weise in die Öffnung 14 des Heizgerätegehäuses 16 einzusetzen und weist beispielsweise auch das Rastelement 24 auf.

Ein zweites Anschlusseinheitkörperteil 68 ist über ein O-ringartiges Dichtelement 70 fluiddicht mit dem ersten Anschlusseinheitkörperteil 66 verbunden und weist den Kraftstoffzuführanleitungsanschlussbereich 46 mit dem darin gebildeten Kraftstoffkanal 48 auf. Zu erkennen ist in Fig. 4, dass der Kraftstoffabgabeleitungsanschlussbereich 32 und der Kraftstoffzuführleitungsanschlussbereich 46 zueinander fluchtend angeordnet sind, so dass die darin gebildeten Kraftstoffkanäle 34, 48 einander in Richtung einer Kanallängsachse K axial fortsetzend und ohne seitlichen Versatz bezüglich der Kanallängsachse K verlaufen.

Am zweiten Anschlusseinheitkörperteil 68 ist ein beispielsweise konisch geformter Ventilsitz 72 ausgebildet, auf welchem ein als Ventilkugel ausgebildetes Ventilorgan 74 aufsitzen kann. Ein als Schraubendruckfeder ausgebildetes Vorspannorgan 76 stützt sich einerseits an einem auch in das zweite Anschlusseinheitkörperteil 68 eingreifend positionierten Abschnitt 78 des ersten Anschlusseinheitkörperteils 66 ab und presst dabei das Ventilorgan 74 gegen seinen Ventilsitz 72. Somit ist zwar bei Bereitstellung eines entsprechenden Kraftstoffdrucks im Kraftstoffkanal 48 unter Kompression des Vorspannorgans 76 eine Kraftstoffströmung durch den Kraftstoffkanal 48, das Kraftstoffströmungsvolumen 36 und den Kraftstoffkanal 34 in Richtung zu einem Brennerbereich eines Fahrzeugheizgeräts möglich, ein Strom in der entgegengesetzten Richtung bzw. auch der Austritt von im Brennerbereich bestehenden Kraftstoffgasen wird durch das Rückschlagventil 64 jedoch unterbunden.

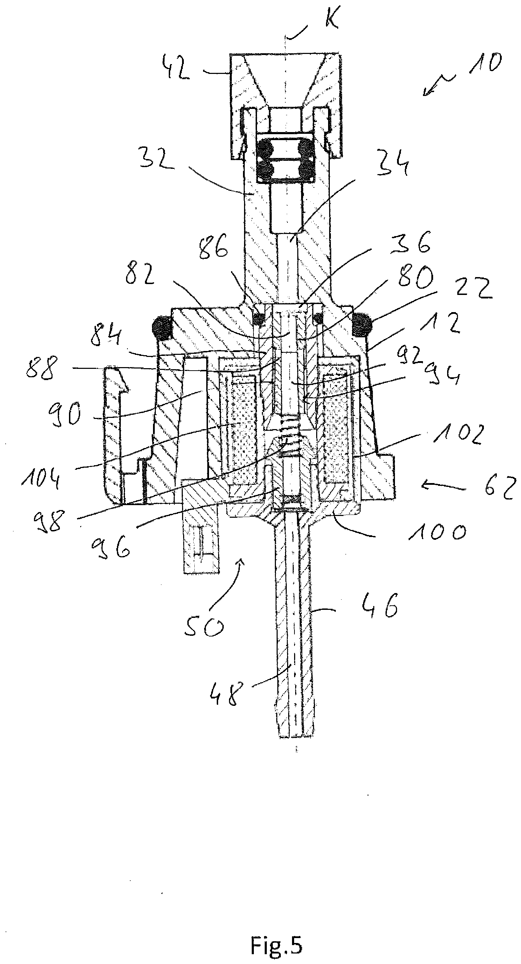

Die Fig. 5 zeigt eine Kraftstoffanschlusseinheit 10, bei welcher in Weiterbildung der in Fig. 3 prinzipartig dargestellten Ausgestaltung als Funktionseinheit 50 eine allgemein auch als Dosierpumpe bezeichnete Kraftstoffpumpe 62 vorgesehen ist.

Die Kraftstoffpumpe 62 umfasst im Anschlusseinheitkörper 12 einen Pumpenkammereinsatz 80 mit einer darin in Richtung einer Kanallängsachse K langgestreckten Pumpenkammer 82. Der Pumpenkammereinsatz 80 ist von einem Pumpengehäuse 84 umgeben, welches unter Zwischenlagerung eines Dichtelements 86 am Anschlusseinheitkörper 12 getragen ist und zusammen mit einem Längenbereich des Pumpenkammereinsatzes 80 ein über Öffnungen 88 zur Pumpenkammer 82 offenes, ringartiges Zuleitvolumen 90 bildet.

In der Pumpenkammer 82 ist ein einen Pumpenkolben 92 bereitstellendes Pumporgan 94 in Richtung der Kanallängsachse K hin- und herbewegbar, wobei auch bei der in Fig. 5 dargestellten Ausgestaltungsform einer Kraftstoffanschlusseinheit 10 zu bemerken ist, dass die beiden Kraftstoffkanäle 34, 48 zueinander in Richtung der Kanallängsachse K fluchtend angeordnet sind.

An einem nicht im Pumpenkammereinsatz 80 liegenden Bereich des Pumpenkolbens 92 ist ein Anker 96 angeordnet. An dem Pumpenkammereinsatz 80 einerseits und dem Anker 96 andererseits stützt sich ein als Schraubendruckfeder ausgebildetes Vorspannorgan 98 ab, welches somit den Pumpenkolben 92 in Richtung aus der Pumpenkammer 82 heraus und in Anlage an einem den Kraftstoffzuführleitungsanschlussbereich 46 bereitstellenden Teil 100 der Kraftstoffanschlusseinheit 10 vorspannt.

Am bzw. im Anschlusseinheitkörper 12 ist als Teil einer Antriebseinheit 101 eine Elektromagneteinheit 102 mit einer elektrisch erregbaren Spulenanordnung 104 fest getragen. Durch Erregung der Spulenanordnung 104 wird eine magnetische Wechselwirkung mit dem Anker 96 erzeugt, welche diesen in das Innere der Elektromagneteinheit 102 beaufschlagt und damit den Pumpenkolben 92 in Richtung Verkleinern des mit Kraftstoff befüllten Volumens der Pumpenkammer 82 zum Ausstoßen von Kraftstoff bewegt. Es sei hier darauf hingewiesen, dass für eine definierte Kraftstoffführung stromabwärts der Pumpenkammer 82, beispielsweise am Beginn des Kraftstoffkanals 34, ein den Kraftstoffstrom nur in Richtung in den Kraftstoffkanal 34 hinein zulassendes Rückschlagventil vorgesehen sein kann und entsprechend auch stromaufwärts der Pumpenkammer 82, beispielsweise am Ende des Kraftstoffkanals 48, ein den Kraftstoffstrom nur in Richtung zur Pumpenkammer 82 zulassendes Rückschlagventil vorgesehen sein kann.

Durch eine alternierende Hin- und Herbewegung wird entsprechend alternierend Kraftstoff über den Kraftstoffkanal 48 in der Pumpenkammer 82 aufgenommen und aus der Pumpenkammer 82 in den Kraftstoffkanal 34 ausgestoßen. Bei jeder derartigen Bewegung des Pumpenkolbens 92 wird ein definiertes Volumen von Kraftstoff aus der Pumpenkammer 82 ausgestoßen und in Richtung zu einem Brennerbereich des Heizgerätes gefördert, so dass durch die Einstellung der Arbeitsfrequenz einer derartigen Kraftstoffpumpe 62 eine dosierte Menge des zu dem Brennerbereich zu fördernden Kraftstoffs gepumpt werden kann.

Abschließend sei darauf hingewiesen, dass auch anders gestaltete Funktionseinheiten, welche auf den Kraftstoffstrom und somit den geförderten Kraftstoff einwirken, in einer derartigen Kraftstoffanschlusseinheit vorgesehen sein können. So ist es beispielsweise möglich, in den Anschlusseinheitkörper einen Kraftstofffilter mit einem siebartigen Filterelement zu integrieren, so dass der über den Kraftstoffkanal 48 heranströmende Kraftstoff zunächst dieses siebartige Filterelement durchströmen muss und dann von möglicherweise mitgeführten Partikeln gereinigt in den Kraftstoffkanal 34 weiter strömen kann.

## Patentansprüche

1. Brennstoffbetriebenes Fahrzeugheizgerät, umfassend eine Kraftstoffanschlusseinheit (10) mit einem Anschlusseinheitkörper (12) und ein Heizgerätegehäuse (16), wobei der Anschlusseinheitkörper (12) in das Heizgerätegehäuse (16) eingesetzt ist und dadurch die Kraftstoffanschlusseinheit (10) an dem Heizgerätegehäuse (16) angebracht ist, und wobei die Kraftstoffanschlusseinheit (10) einen von dem Anschlusseinheitkörper (12) abstehenden Kraftstoffzuführleitungsanschlussbereich (46) zum Anschluss einer Kraftstoffzuführleitung umfasst, **gekennzeichnet durch**, einen von dem Anschlusseinheitkörper (12) abstehenden Kraftstoffabgabeleitungsanschlussbereich (32) zum Anschluss einer zu einer Brennkammer führenden Kraftstoffabgabeleitung, wobei in dem Anschlusseinheitkörper (12) wenigstens eine Funktionseinheit (50) zur Beeinflussung der Kraftstoffströmung in einem in dem Anschlusseinheitkörper (12) ausgebildeten Kraftstoffströmungsvolumen (36) vorgesehen ist.

2. Brennstoffbetriebenes Fahrzeugheizgerät nach Anspruch 1, **dadurch gekennzeichnet, dass** die wenigstens eine Funktionseinheit (50) einen Pulsationsdämpfer (52) umfasst.

3. Brennstoffbetriebenes Fahrzeugheizgerät nach Anspruch 2, **dadurch gekennzeichnet, dass** der Pulsationsdämpfer (52) ein Druckausgleichsvolumen (56) und ein das Druckausgleichsvolumen (56) von dem Kraftstoffströmungsvolumen (36) im Anschlusseinheitkörper (12) trennendes, flexibles Trennorgan (58) umfasst.

4. Brennstoffbetriebenes Fahrzeugheizgerät nach Anspruch 3, **dadurch gekennzeichnet, dass** der Pulsationsdämpfer (52) einen das Druckausgleichsvolumen (56) bereitstellenden Pulsationsdämpferkörper (54) umfasst, wobei das flexible Trennorgan (58) an dem Pulsationsdämpferkörper (54) das Druckausgleichsvolumen (56) abschließend festgelegt ist.

5. Brennstoffbetriebenes Fahrzeugheizgerät nach Anspruch 3 oder 4, **dadurch gekennzeichnet, dass** in dem Anschlusseinheitkörper (12) eine den Pulsationsdämpfer (52) aufnehmende Dämpferaufnahmeaussparung (51) ausgebildet ist.

6. Brennstoffbetriebenes Fahrzeugheizgerät nach einem der vorangehenden Ansprüche, **dadurch gekennzeichnet, dass** die wenigstens eine Funktionseinheit (50) ein Kraftstoffventil (60) umfasst.

7. Brennstoffbetriebenes Fahrzeugheizgerät nach Anspruch 6, **dadurch gekennzeichnet, dass** das Kraftstoffventil (60) ein die Kraftstoffanschlusseinheit (10) gegen Durchströmung in Richtung von dem Kraftstoffabgabeleitungsanschlussbereich (32) zu dem Kraftstoffzuführleitungsanschlussbereich (46) sperrendes Rückschlagventil (64) umfasst.

8. Brennstoffbetriebenes Fahrzeugheizgerät nach Anspruch 7, **dadurch gekennzeichnet, dass** das Rückschlagventil (64) ein an einem ersten Anschlusseinheitkörperteil (66) abgestütztes Vorspannorgan (76), vorzugsweise Vorspannfeder, und ein durch das Vorspannorgan (76) gegen einen Ventilsitz (72) an einem zweiten Anschlusseinheitkörperteil (68) gepresstes Ventilorgan (74), vorzugsweise Ventilkugel, umfasst.

9. Brennstoffbetriebenes Fahrzeugheizgerät nach Anspruch 6, 7 oder 8, **dadurch gekennzeichnet, dass** das Kraftstoffventil (60) ein zum Freigeben und Sperren eines Strömungsweges von dem Kraftstoffzuführleitungsanschlussbereich (46) zu dem Kraftstoffabgabeleitungsanschlussbereich (32) ansteuerbares Schaltventil umfasst.

10. Brennstoffbetriebenes Fahrzeugheizgerät nach einem der vorangehenden Ansprüche, wobei die wenigstens eine Funktionseinheit (50) eine Kraftstoffpumpe (62) umfasst.

11. Brennstoffbetriebenes Fahrzeugheizgerät nach Anspruch 10, **dadurch gekennzeichnet, dass** die Kraftstoffpumpe (62) ein zum Fördern von Kraftstoff hin- und her bewegbares Pumporgan (94) und eine dem Pumporgan (94) zugeordnete elektrisch erregbare Antriebseinheit (101) umfasst.

12. Brennstoffbetriebenes Fahrzeugheizgerät nach Anspruch 11, **dadurch gekennzeichnet, dass** die Antriebseinheit (101) eine an dem Anschlusseinheitkörper (12) feststehend getragene Elektromagneteinheit (102) und einen in einer Pumpenkammer (82) linear hin und her bewegbaren Pumpenkolben (92) und einen an dem Pumpenkolben (92) vorgesehenen Anker (96) zur magnetischen Wechselwirkung mit der Elektromagneteinheit (102) umfasst, wobei der Pumpenkolben (92) durch elektrische Erregung der Elektromagneteinheit (102) in Richtung Ausstoßen von Kraftstoff aus der Pumpenkammer (82) bewegbar ist und durch ein Vorspannorgan (98), vorzugsweise Vorspannfeder, in Richtung Aufnahme von Kraftstoff in der Pumpenkammer (82) bewegbar ist.

13. Brennstoffbetriebenes Fahrzeugheizgerät nach einem der vorangehenden Ansprüche, **dadurch gekennzeichnet, dass** die wenigstens eine Funktionseinheit (50) einen Kraftstofffilter umfasst.

14. Brennstoffbetriebenes Fahrzeugheizgerät nach einem der vorangehenden Ansprüche, **dadurch gekennzeichnet, dass** der Kraftstoffzuführleitungsanschlussbereich (46) und der Kraftstoffabgabeleitungsanschlussbereich (32) zueinander fluchtend angeordnet sind.

## Claims

1. Fuel operated vehicle heating device, comprising a fuel connection unit (10) with a connection unit body (12) and a heating device housing (16), wherein the connection unit body (12) is integrated into the heating device housing (16) whereby the fuel connection unit (10) is mounted at the heating device housing (16) and wherein the fuel connection unit (10) comprises a fuel feed line connection area (46) projecting from the connection unit body (12) for connecting a fuel feed line,
**characterized by** a fuel release line connection area (32) projecting from the connection unit body (12) for connecting a fuel release line leading to a combustion chamber, wherein at least one functional unit (50) for influencing the flow of fuel is provided in a fuel flow volume (36) formed in the connection unit body (12).

2. Fuel operated vehicle heating device in accordance with claim 1, **characterized in that** the at least one functional unit (50) comprises a pulsation damper (52).

3. Fuel operated vehicle heating device in accordance with claim 2, **characterized in that** the pulsation damper (52) comprises a pressure equalization volume (56) and a flexible separating element (58) separating the pressure equalization volume (56) from the fuel flow volume (36) in the connection unit body (12).

4. Fuel operated vehicle heating device in accordance with claim 3, **characterized in that** the pulsation damper (52) comprises a pulsation damper body (54) providing the pressure equalization volume (56), wherein the flexible separating element (58) is fixed at the pulsation damper body (54) such that it closes the pressure equalization volume (56).

5. Fuel operated vehicle heating device in accordance with claim 3 or 4, **characterized in that** a damper mounting recess (51) receiving the pulsation damper (52) is formed in the connection unit body (12).

6. Fuel operated vehicle heating device in accordance with one of the preceding claims, **characterized in that** the at least one functional unit (50) comprises a fuel valve (60).

7. Fuel operated vehicle heating device in accordance with claim 6, **characterized in that** the fuel valve (60) comprises a nonreturn valve (64) blocking the fuel connection unit (10) against flow in the direction from the fuel release line connection area (32) to the fuel feed line connection area (46).

8. Fuel operated vehicle heating device in accordance with claim 7, **characterized in that** the nonreturn valve (64) comprises a prestressing element (76) supported at a first connection unit body part (66), preferably a prestressing spring, and a valve element (74) pressed by the prestressing element (76) against a valve seat (72) at a second connection unit body part (68), preferably a valve ball.

9. Fuel operated vehicle heating device in accordance with claim 6, 7 or 8, **characterized in that** the fuel valve (60) comprises an on-off valve, which can be actuated for releasing and blocking a flow path from the fuel feed line connection area (46) to the fuel release line connection area (32).

10. Fuel operated vehicle heating device in accordance with one of the preceding claims, wherein the at least one functional unit (50) comprises a fuel pump (62).

11. Fuel operated vehicle heating device in accordance with claim 10, **characterized in that** the fuel pump (62) comprises a pumping element (94) movable to and fro for the delivery of fuel and an electrically excitable drive unit (101) associated with the pumping element (94).

12. Fuel operated vehicle heating device in accordance with claim 11, **characterized in that** the drive unit (101) comprises an electromagnet unit (102) carried stationarily at the connection unit body (12) and a pump piston (92) movable linearly to and fro in a pump chamber (82) and an armature (96) provided at the pump piston (92) for the magnetic interaction with the electromagnet unit (102), wherein the pump piston (92) can be moved by electrical excitation of the electromagnet unit (102) in the direction in which fuel is discharged from the pump chamber (82), and it can be moved by a prestressing element (98), preferably a prestressing spring, in the direction in which fuel is received in the pump chamber (82).

13. Fuel operated vehicle heating device in accordance with one of the preceding claims, **characterized in that** the at least one functional unit (50) comprises a fuel filter.

14. Fuel operated vehicle heating device in accordance with one of the preceding claims, **characterized in that** the fuel feed line connection area (46) and the fuel release line connection area (32) are arranged flush with one another.

## Revendications

1. Dispositif de chauffage de véhicule fonctionnant au carburant, comprenant une unité de raccordement de carburant (10) avec un corps d'unité de raccordement (12) et un boîtier de dispositif de chauffage (16), dans lequel le corps d'unité de raccordement (12) est intégré dans le boîtier de dispositif de chauffage (16) et ainsi l'unité de raccordement de carburant (10) est montée sur le boîtier de chauffage (16) et dans lequel l'unité de raccordement de carburant (10) comprend une zone de raccordement de ligne d'alimentation en carburant (46) faisant saillie du corps d'unité de raccordement (12) pour raccorder une ligne d'alimentation en carburant, **caractérisé par** une zone de raccordement de ligne de distribution de carburant (32), faisant saillie du corps d'unité de raccordement (12), pour raccorder une ligne de distribution de carburant menant à une chambre de combustion, dans lequel au moins une unité fonctionnelle (50) destinée à influencer l'écoulement de carburant est prévue dans un volume d'écoulement de carburant (36) formé dans le corps d'unité de raccordement (12).

2. Dispositif de chauffage de véhicule fonctionnant au carburant selon la revendication 1, **caractérisé en ce que** ladite au moins une unité fonctionnelle (50) comprend un amortisseur de pulsations (52).

3. Dispositif de chauffage de véhicule fonctionnant au carburant selon la revendication 2, **caractérisé en ce que** l'amortisseur de pulsations (52) comprend un volume d'égalisation de pression (56) et un élément de séparation flexible (58) séparant le volume d'égalisation de pression (56) du volume d'écoulement de carburant (36) dans le corps d'unité de raccordement (12).

4. Dispositif de chauffage de véhicule fonctionnant au carburant selon la revendication 3, **caractérisé en ce que** l'amortisseur de pulsations (52) comprend un corps d'amortisseur de pulsations (54) fournissant le volume d'égalisation de pression (56), dans lequel l'élément de séparation flexible (58) est fixé au corps d'amortisseur de pulsations (54) de telle sorte qu'il ferme le volume d'égalisation de pression (56).

5. Dispositif de chauffage de véhicule fonctionnant au carburant selon la revendication 3 ou 4, **caractérisé en ce qu'**un évidement de montage d'amortisseur (51) recevant l'amortisseur de pulsations (52) est formé dans le corps d'unité de raccordement (12).

6. Dispositif de chauffage de véhicule fonctionnant au carburant selon l'une des revendications précédentes, **caractérisé en ce que** ladite au moins une unité fonctionnelle (50) comprend une soupape de carburant (60).

7. Dispositif de chauffage de véhicule fonctionnant au carburant selon la revendication 6, **caractérisé en ce que** la soupape de carburant (60) comprend une soupape anti-retour (64) bloquant l'unité de raccordement de carburant (10) contre l'écoulement dans la direction allant de la zone de raccordement de la ligne de distribution de carburant (32) à la zone de raccordement de la ligne d'alimentation en carburant (46).

8. Dispositif de chauffage de véhicule fonctionnant au carburant selon la revendication 7, **caractérisé en ce que** la soupape anti-retour (64) comprend un élément de précontrainte (76) supporté au niveau d'une première partie de corps d'unité de raccordement (66), de préférence un ressort de précontrainte, et un élément de soupape (74) pressé par l'élément de précontrainte (76) contre un siège de soupape (72) au niveau d'une deuxième partie de corps d'unité de raccordement (68), de préférence une bille de soupape.

9. Dispositif de chauffage de véhicule fonctionnant au carburant selon les revendications 6, 7 ou 8, **caractérisé en ce que** la soupape de carburant (60) comprend une soupape marche-arrêt, qui peut être actionnée pour libérer et bloquer un chemin d'écoulement de la zone de raccordement de la ligne d'alimentation en carburant (46) à la zone de raccordement de la ligne de distribution de carburant (32).

10. Dispositif de chauffage de véhicule fonctionnant au carburant selon l'une des revendications précédentes, dans lequel ladite au moins une unité fonctionnelle (50) comprend une pompe à carburant (62).

11. Dispositif de chauffage de véhicule fonctionnant au carburant selon la revendication 10, **caractérisé en ce que** la pompe à carburant (62) comprend un élément de pompage (94) mobile en va-et-vient pour le transport de carburant et une unité d'entraînement (101) électriquement excitable associée à l'élément de pompage (94).

12. Dispositif de chauffage de véhicule fonctionnant au carburant selon la revendication 11, **caractérisé en ce que** l'unité d'entraînement (101) comprend une unité d'électroaimant (102) portée de manière fixe au niveau du corps d'unité de raccordement (12) et un piston de pompe (92) mobile linéairement en va-et-vient dans une chambre de pompe (82) et une armature (96) prévue au niveau du piston de pompe (92) pour l'interaction magnétique avec l'unité d'électroaimant (102), dans lequel le piston de pompe (92) peut être déplacé par excitation électrique de l'unité d'électroaimant (102) dans la direction dans laquelle le carburant est évacué de la chambre de pompe (82), et il peut être déplacé par un élément de précontrainte (98), de préférence un ressort de précontrainte, dans la direction dans laquelle le carburant est reçu dans la chambre de pompe (82).

13. Dispositif de chauffage de véhicule fonctionnant au carburant selon l'une des revendications précédentes, **caractérisé en ce que** ladite au moins une unité fonctionnelle (50) comprend un filtre à carburant.

14. Dispositif de chauffage de véhicule fonctionnant au carburant selon l'une des revendications précédentes, **caractérisé en ce que** la zone de raccordement de la ligne d'alimentation en carburant (46) et la zone de raccordement de la ligne de distribution de carburant (32) sont disposées de manière à être alignées l'une avec l'autre.
